# EUROPEAN PATENT APPLICATION

(11) **EP 0 987 081 A1**
(43) Date of publication of application: **22.03.2000**
(21) Application number: 98117367.7
(22) Date of filing: 14.09.1998
(51) Int. Cl.: B23P 11/00, B21K 25/00, F16H 57/02, F16D 1/072

(54) **Method for the assembly of a wheel and a shaft and an apparatus for transmitting forces**

(71) Applicant: Electrowatt Technology Innovation AG, 6301 Zug (CH)
(72) Inventor: Nilheim, Jan, 11233 Stockholm (SE); Arvidsson,Ulf, 12938 Stockholm (SE)

(57) **Abstract**

The invention describes an assembly method for joining a wheel (1) and a shaft (3), wherein the wheel (1) incooperates an inlet (7) in which the shaft (3) is at least partially inserted, by pressing the shaft (3) into said inlet (7) of said wheel (1). Such pressing is accompanied by a press fitting of the shaft (3) into said inlet (7) and by additionally cutting one or more splines (9) into the inner walls of said inlet (7) and/or into the outer walls of said shaft (3) by additionally creating chips (5) acumulating at the end of the shaft (3) if the shaft (3) is only partionally inserted. Additionally, the invention describes an apparatus for transmitting forces, being produced by the above described method.

## Description

### Field of the invention

The present invention incooperates a method for the assembly of a wheel and a shaft as defined within the preamble of claim 1 as well as an apparatus for transmitting forces as defined within the preamble of claim 7.

### Background Art

To assemble a wheel on a shaft or vice versa, especially for assemblies which are supposed to transmit considerable strong forces, prior art methods require a separate assembly part or device on the shaft to press fit or rivet the wheel on the shaft. Especially for the assembly of a gear wheel on a pinion, which are usually circular in shape, it has always been necessary to provide additional parts or devices like nuts, bolts or screws to achieve a secure and tight connection among the gear wheel and the pinion in order to guarantee a safe and reliable force transmission. This prior art assembly constitutes an apparatus for transmitting forces among its different parts, hence requiring additional means for the linkage of wheel and shaft, therefore being able to satisfy requirements in gears, transmissions, power plants, and similar purposes.

The disadvantage of these methods and apparatus is the necessity to provide additional parts for the coupling and connection of wheel and shaft, thus rendering these techniques complicated and expensive. Moreover, conventional press fining methods require very precisely shaped shafts and wheels in order to be able to insert the shaft into the wheel without being faced with backlash or the disability to insert the shaft, if the outer diameter of the shaft is bigger than the inner diameter of the wheel inlet. Additionally, sintered materials incooperate wide tolerances which make conventional press fitting methods impossible.

### Object of Invention

The object of the invention is to provide a method for the assembly of a wheel and a shaft as well as an apparatus for transmitting forces which overcome the disadvantages of prior art, which are easy and inexpensive to realise and which are applicable to all kinds of materials and treated materials.

### General description of invention

The invention describes an assembly method for joining a wheel and a shaft, wherein the wheel incooperates an inlet in which the shaft is at least partially inserted, by pressing the shaft into said inlet of said wheel. Such pressing is accompanied by a press fining of the shaft into said inlet and by additionally cutting one or more splines into the inner walls of said inlet and/or into the outer walls of said shaft.

If a circular or rectangular shaft and a circular or rectangular inlet within said wheel are used, said shaft is provided with adjacently distanced struts or ribs extending radially away from the axis of said shaft or, vice versa, said inlet is provided with adjacently distanced struts or ribs extending radially away from the walls of said inlet so that said struts or ribs are cutting said splines into the inner walls of said circular inlet or into the outer walls of said shaft, respectively, during the pressing or press fitting step, by creating chips during the cutting step. The struts or ribs which are either attached onto the inner walls of the inlet or hole of the wheel or onto the outer circumference of the shaft serve the purpose of cutting the splines into the material of the counterpart and, thereafter, to transmit any forces or torque throughout the interaction of the splines and the struts or ribs. Additionally, because of the cutting process, there will be no backlash or gap in between the splines and the struts or ribs, hence providing a tight and secure coupling assemply.

The method and the apparatus also provide for tolerances of the inlet of the wheel as well as for the shaft or the struts or ribs, respectively, since these tolerances are equalized by the splines which may have different depths, depending on those tolerances but being indifferent with respect to the function of the assembly. In order to centre the shaft or the end of said shaft within said inlet or relative to the wheel it is advantageous to chamfer the edge of the inlet if the struts or ribs are placed on the shaft or to chamfer the edge of the shaft if the struts or ribs are placed within the inlet.

Heating or cooling said shaft and/or said wheel prior to said pressing or press fitting allows to first cut said micro splines and then, after cooling, achieve a very high friction among both parts, since the metal expands by cooling. Sintering at least parts of said shaft and/or said struts or ribs prior to said pressing or press fining is advisable to guarantee that one of the materials, either the shaft or the wheel - the one which carries the struts or ribs - is able to cut into the other material by creating chips which accumulate at the end of the splines.
If the shaft and said inlet within said wheel are circular shaped, said circular shaft has adjacently distanced struts or ribs extending radially away from the axis of said shaft wherein the inlet diameter is smaller than the shaft diameter, including said struts or ribs. Vice versa, said inlet has adjacently distanced struts or ribs extending radially away from the walls of said inlet, wherein the inlet diameter is bigger than the shaft diameter, including said struts or ribs. The shaft has preferably triangular shaped struts or ribs narrowing towards said inner walls of said inlet or towards the cutting edge if placed at at the inner walls of the inlet.

The shaft can be a pinion with cogs, said wheel a gear wheel and said inlet a centred hole within said gear wheel so that the whole assembly can be used for transmissions, gears and similar torque or force transmission systems.

Preferably, the shaft is only partially inserted within said inlet and axially fixed with chips at the end of said shaft or, being more precise, at the rim between the end of the spline and the end of the struts or ribs, said chips being cut into said inlet of said wheel during the insertion of said shaft into said wheel. The inlet diameter is about 0,2 mm smaller than the shaft diameter, or vice versa, including said struts or ribs, so that the depth of said splines is about 0,01 mm to 0,19 mm, preferably about 0,1 mm. The splines and/or the friction between said shaft and said wheel and/or said chips transmit said forces, preferably rotational forces among said shaft and said wheel. The material of said shaft and/or the material of said struts or ribs can be metal or plastic.

### Detailed description of invention

Preferred embodiments of the present invention are described with the following drawings, thus showing:
- Fig. 1: A view from underneath the assembly of the present invention,
- Fig. 2: The cross section A-A of Fig. 1,
- Fig. 3: Another embodiment of the assembly with a rectangular shalt, and
- Fig. 4: The application of splines at the wall of the inlet of the wheel.

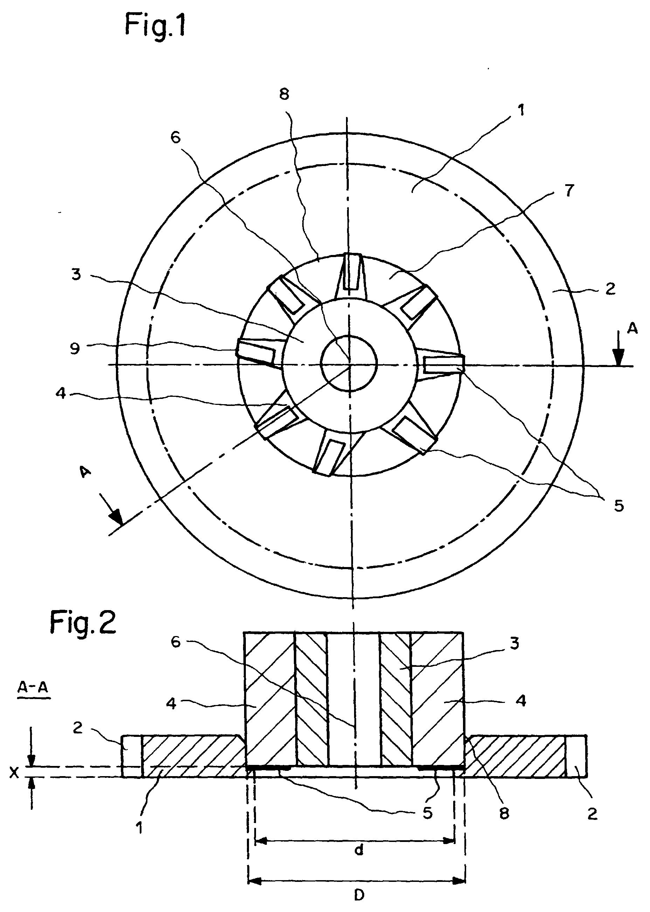

Fig. 1 shows a view from underneath the assembly of the present invention. The apparatus for transmitting forces comprises a wheel 1 with an inlet 7 and a shaft 3 which is partially inserted into said inlet 7 of said wheel 1. The wheel 1 and the shaft 3 are transmitting forces among each other,
the shaft 3 is press fitted within the inlet 7 of the wheel 1 .

Fig. 2 shows a cross sectional view A - A as marked within Fig. 1. The following description refers to both Fig. 1 and Fig. 2.

The shaft 3 is press fitted within splines 9, being cut into the inlet 7 of the wheel 1 during the insertion of the shaft 3 into the wheel 1. The inlet 7 is a circular hole, being centrally placed within the wheel 1. The wheel 1 is a gear wheel, having a gear rim 2. The circular shaft 3, being a pinion with a central axis 6, which is hollow, has adjacently distanced struts or fibs 4 extending radially away from the axis 6 of the shaft 3 (star polygonially arranged ribs), wherein the inlet diameter d is smaller than the shaft diameter D, including the struts or ribs 4. It is also possible to insert special hardened or sintered inlays within the struts or ribs which are able to cut into the material of the wheel like a milling cutter. The struts or ribs 4 are placed within splines 9 within the inner walls of the circular inlet 7.

The shaft 3 has triangular shaped struts or ribs 4 narrowing towards the inner walls of the inlet 7, at the end of these struts one can see chips 5 which result from the cutting process and which additionally axially fix the shaft 3 within the wheel 1. The inlet diameter d is about 0,2 mm smaller than the shaft diameter D, including the struts or ribs 4, so that the depth of the splines 9 is about 0,01 mm to 0,19 mm, preferably about 0,1 mm. The splines 9 and/or the friction between the shaft 3 and the wheel 1 and/or the chips 5 transmit the forces, preferably rotational forces among the shaft 3 and the wheel 1. As shown in Fig. 2, the edge 8 of the inlet 7 of the wheel 1 is chamferred to allow for centrally positioning and cutting the shaft 3 into the hole of the wheel 1.

The material of the shaft 3 and the material of the struts or ribs 4 is harder than the material of the wheel 1 or the walls of the inlet 7. Preferably, the material of the cutting part of the assembly is sintered.

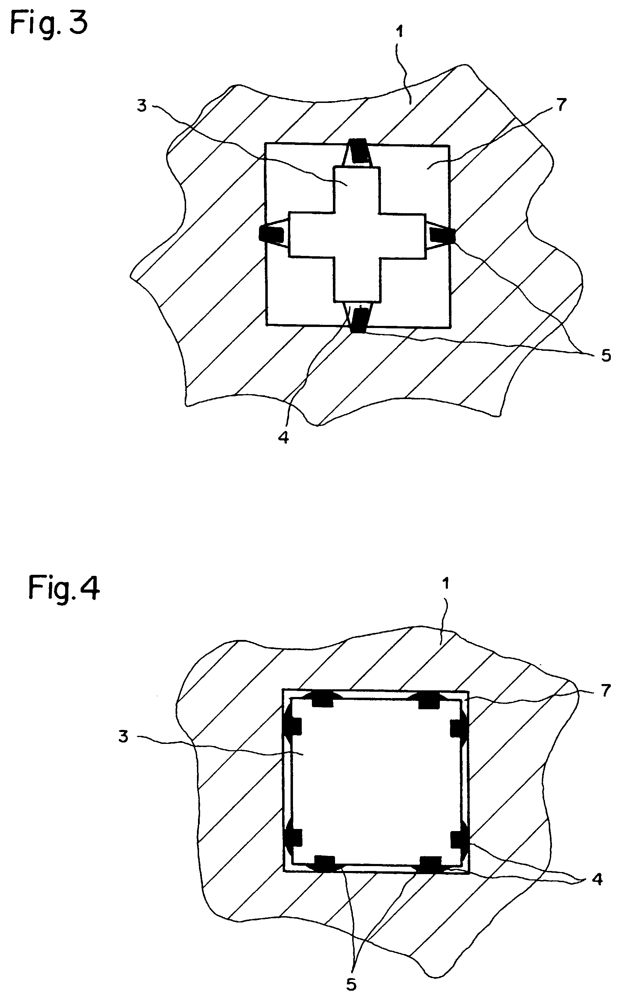

Fig. 3 shows another embodiment of the assembly with a rectangular shaft and a rectangular inlet 7. The wheel 1 is connected to the shaft 3 by ribs or struts 4, cutting splines 9 into the material of the wheel 1. Fig. 4 shows the application of splines 9 at the wall of the inlet 7 of the wheel 1. Chips 5 are hidden behind those ribs or struts 4, since Fig. 4 is a view from underneath the assembly. Once again, a rectangular shaft 3 and a rectangular inlet 7 of the wheel 1 are shown.

When the shaft 3 is pressed into the inlet 7 of the wheel 1, the cogs or struts will cut micro splines (0,1 mm depth) into the material of the wheel 1, thus forming a press fitting. The chips 5 will not get loose if the shaft 3 is stopped - e.g. x=0,3 mm before the end of the hole - before completely penetrating and going through the entire hole of the wheel 1.

## Claims

1. Assembly method for joining a wheel (1) and a shaft (3),
wherein the wheel (1) incooperates an inlet (7) in which the shaft (3) is at least partially inserted,
**characterized by,**
pressing the shaft (3) into said inlet (7) of said wheel (1).

2. Assembly method as claimed in claim 1,
**characterized by,**
press fitting the shaft (3) into said inlet (7) by additionally cutting one or more splines (9) into the inner walls of said inlet (7) and/or into the outer walls of said shaft (3).

3. Assembly method as claimed in claim 1 or 2,
**characterized by,**
using a circular shaft (3) and a circular inlet (7) within said wheel (1) and
providing said circular shaft (3) with adjacently distanced struts or ribs (4) extending radially away from the axis (6) of said shaft (3) and/or providing said inlet (7) with adjacently distanced struts or ribs (4) extending radially away from the walls of said inlet (7), wherein
said struts or ribs (4) are cutting said splines (9) into the inner walls of said circular inlet (7) or into the outer walls of said shaft (3), respectively, during the pressing or press fitting step, by creating chips (5) during the cutting step.

4. Assembly method as claimed in one of the preceding claims,
**characterized by,**
chamfering the edge (8) of said inlet (7) and/or the end of said shaft (3) for centering the shaft (3) within said inlet (7) and/or relative to the wheel (1).

5. Assembly method as claimed in one of the preceding claims,
**characterized by,**
heating or cooling said shaft (3) and/or said wheel (1) prior to said pressing or press fitting.

6. Assembly method as claimed in one of the preceding claims,
**characterized by,**
sintering at least parts of said shaft (3) and/or said struts or ribs (4) prior to said pressing or press fitting.

7. Apparatus for transmitting forces, comprising
a wheel (1) with an inlet (7), and
a shaft (3) which is at least partially inserted into said inlet (7) of said wheel (1), wherein said wheel (1) and said shaft (3) are transmitting forces among each other,
**characterized in that,**
said shaft (3) is press fitted within said inlet (7) of said wheel (1).

8. Apparatus as claimed in claim 7,
**characterized in that,**
said shaft (3) is press fitted within splines (9), being cut into said inlet (7) of said wheel (1) and/or within the outer walls of said shaft (3) during the insertion of said shaft (3) into said wheel (1).

9. Apparatus as claimed in claim 7 or 8,
**characterized in that,**
said shaft (3) and said inlet (7) within said wheel (1) are circular shaped,
said circular shaft (3) has adjacently distanced struts or ribs (4) extending radially away from the axis (6) of said shaft (3), wherein the inlet diameter (d) is smaller than the shaft diameter (D), including said struts or ribs (4), and/or
said inlet (7) has adjacently distanced struts or ribs (4) extending radially away from the walls of said inlet (7), wherein the inlet diameter (d) is bigger than the shaft diameter (D), including said struts or ribs (4), and
said struts or ribs (4) are placed within splines (9) within the inner walls of said circular inlet (7) and/or said outer walls of said shaft (3).

10. Apparatus as claimed in claims 7 - 9,
**characterized in that,**
said shaft (3) has triangular shaped struts or ribs (4) narrowing towards said inner walls of said inlet (7).

11. Apparatus as claimed in claims 7 - 10,
**characterized in that,**
said shaft (3) is a pinion with cogs, said wheel (1) is a gear wheel and said inlet (7) is a centred hole within said gear wheel.

12. Apparatus as claimed in claims 7 - 11,
**characterized in that,**
said shaft (3) is partially inserted within said inlet (7) and axially fixed with chips (5) at the end of said shaft (3), said chips (5) being cut into said inlet (7) of said wheel (1) during the insertion of said shaft (3) into said wheel (1).

13. Apparatus as claimed in claims 7 - 12,
**characterized in that,**
the inlet diameter (d) is about 0,2 mm smaller than the shaft diameter (D), including said struts or ribs (4), so that the depth of said splines (9) is about 0,01 mm to 0,19 mm, preferably about 0,1 mm.

14. Apparatus as claimed in claims 7 - 13,
**characterized in that,**
said splines (9) and/or the friction between said shaft (3) and said wheel (1) and/or said chips (5) transmit said forces, preferably rotational forces among said shaft (3) and said wheel (1).

15. Apparatus as claimed in claims 7 - 14,
**characterized in that,**
the material of said shaft (3) and/or the material of said struts or ribs (4) is harder than the material of said wheel (1) or the walls of said inlet (7).

16. Apparatus as claimed in claims 7 - 15,
**characterized in that,**
the edge (8) of said inlet (7) is chamferred and/or at least parts, preferably the end of said shaft (3) are sintered.

17. Usage of the Assembly method as claimed in one or more of the claims 1 - 6 for the assembly of an apparatus for transmitting forces as claimed in one or more of the claims 7 - 16.

18. Usage of the apparatus for transmitting forces as claimed in one or more of the claims 7 - 16 for transmitting forces between a gear wheel and a pinion.
